# EUROPEAN PATENT SPECIFICATION

(11) **EP 1 163 470 B1**
(45) Date of publication and mention of the grant of the patent: **10.08.2005**
(21) Application number: 00908117.5
(22) Date of filing: 03.03.2000
(51) Int. Cl.: F16L 59/02, E04B 1/78, F24F 13/02, F24F 13/24

(54) **SELF-ADHESIVE INSULATION BLANKET**
SELBSTKLEBENDE ISOLIERUNGSDECKE
COUVERTURE ISOLANTE AUTO-ADHESIVE

(30) Priority: 19.03.1999 NL 1011603
(43) Date of publication of application: 19.12.2001
(73) Proprietor: Rockwool Lapinus B.V., 6045 JG Roermond (NL)
(72) Inventor: ETTEMA, Antonius, Maria, NL-6049 KV Herten (NL); KABO, Pascal, Anne, Frederic, NL-6301 XZ Valkenburg a/d Geul (NL)
(74) Representative: Eveleens Maarse, Pieter
(86) International application number: PCT/NL2000/000134
(87) International publication number: WO 2000/057101

(56) References cited:
- WO-A-97/11841
- CA-A- 2 147 443
- GB-A- 2 099 786
- NL-A- 7 206 406
- US-A- 5 419 859
- US-A- 5 685 938
- US-A- 5 868 891

## Description

The present invention relates to a flexible insulation blanket manufactured from mineral wool, and also a method of manufacture and a method of use of such a blanket, according to the pre-characterising portions of claims 1, 14 and 19, respectively. The disclosure of US-A-5.868.891 is reflected in these pre-characterising portions of aforementioned claims.

For fixing of such blankets previously use was made of mechanical attaching means such as plates with a hole arranged therein, wherein a screw is screwed through the hole and the blanket to fasten the blanket to a supporting element, while use is further made of adhesive tape to adhere such insulation blankets to for instance air ducts.

From US-A-5.685.938 a blanket is known, against which a bitumen-coated layer of Kraft paper of similar material can be attached for the purpose of mounting the blanket to an object for insulation thereof.

The developments known from US-A-5.868.891 have provided a simplification, in that an adhesive layer was provided on one side of the mineral wool blanket, with which the insulation blanket can be adhered to a body for insulating.

It is pointed out that this is an important market in view of the importance of the thermal insulation of such ducts and the great number of kilometres of such air ducts which have been or are applied.

The present invention has been developed in the first instance for such an application.

The object of the present invention is to provide such an insulation blanket which can be adhered easily to carrying bodies such as air ducts and which can be manufactured without significant additional cost and which requires few operations during simplified manufacture.

This objective is achieved with the features in the characterising portions of the independent claims 1, 14 and 19, respectively. Room temperature is here understood to be in the range of +5 degrees C to +30 degrees C.

As a result of these measures such a flexible insulation blanket can easily be arranged around an air duct, wherein a good adhesion is obtained. Arranging requires few operations, while applying such an adhesive layer onto the flexible insulation blanket entails little additional cost.

It is pointed out here that such an insulation blanket can not only be used on ducts of rectangular cross-section but also on ducts with a round or otherwise shaped cross-section.

It will be apparent that the adhesion must be sufficiently strong and durable, not only for adhesion to the body for insulation as well as for cohesion of the insulation blanket itself.

The invention therefore provides the measure that the adhesive force of the adhesive layer is at least as great at room temperature as the cohesion within the mineral wool.

The adhesive layer otherwise has properties such that it melts at higher temperatures. For this the adhesive layer can be applied in melted form; the adhesive layer will then adhere to the rockwool fibres and then partially cure during cooling, wherein a significant degree of adhesive force must however be maintained to enable arrangement on for instance the air ducts.

According to the invention, the adhesive layer is applied in a mesh-like structure. The properties of the substance in question are hereby well utilized; a good adhesion of the adhesive to the rockwool fibres is obtained while on the other hand a good adhesive force is maintained and not a great deal of such an adhesive is otherwise required.

It is noted here that use can be made for this purpose of a self-adhesive "hot melt" known under the name Jowatherm 245.00, which also displays a great adhesive force at room temperature.

According to a the invention the adhesive layer extends to a determined depth into the blanket of mineral wool and this layer is also connected mechanically to the mineral wool.

In order to enhance the insulating properties thereof, such an insulation blanket is provided on its back side with an airflow-inhibiting foil, arranged on said back side with an additional adhesive layer.

This as it were encloses the air in the insulation blanket, thus preventing air movements which greatly limit the insulating value.

So as to facilitate bending of the blanket the main direction of the fibres of the mineral wool extends transversely of the plane of the blanket. This results in the mutual adhesion between the fibres in the direction parallel to the main direction of the blanket being less strong than in other directions, so that the blanket can be bent more easily round for instance a rectangular duct.

In order to facilitate transport and storage of the insulation blanket the blanket is connected on its side provided with adhesive to a detachable carrier film.

This carrier film is arranged on the adhesive layer after application of the adhesive. The carrier film has properties such that it can be easily removed from the adhesive layer, for instance because it is provided with a layer of silicone material.

So as to facilitate arranging operations the carrier film is divided into part-carrier films for individual removal.

Separate part-films can be used for this purpose, although according to a first preferred embodiment the carrier film is provided with weakening lines extending transversely of the length direction of the blanket and located at substantially equal distances, for instance perforations forming the separation between the part-films.

According to a second embodiment use is made of the easy tearing of the carrier films; only small cuts are made in the carrier material which can be torn off during arranging to form complete separations between the carrier films.

Use can be made in both cases of a laser to arrange the weakenings or of perforations or cuts obtained by mechanical means. The use of laser provides the option of processing the carrier only after arrangement on the insulation blanket.

The invention likewise relates to a method of manufacturing an insulation blanket made from mineral wool, comprising of atomizing onto a side of a blanket of mineral wool a material which adheres at high temperatures and which is sticky at room temperatures.

Atomizing produces a structure such that an adhesive layer is created which adheres well. It is pointed out herein that no misting occurs during atomizing; instead there occurs at a spray nozzle a jet of the adhesive which makes a rotating movement as a consequence of the forces acting thereon. This process is also referred to as "swirl". Owing to the combination of the rotating movement of the "swirl" and the linear movement of the insulation blanket there results a mesh-like structure of the threads of the adhesive material which penetrate partially into the mineral wool and which are anchored in the mineral wool in mechanical manner as well as in chemical manner.

Other attractive embodiments of the invention are stated in the remaining sub-claims.

The present invention will now be elucidated with reference to the annexed drawings, in which:
figure 1 shows a cross-sectional view of an insulation blanket according to the invention;
figure 2 shows a schematic perspective view of the manufacture of an insulation blanket according to the present invention; and
figures 3a-3d show various stages of the arrangement of a piece of insulation blanket according to the present invention onto an air duct.

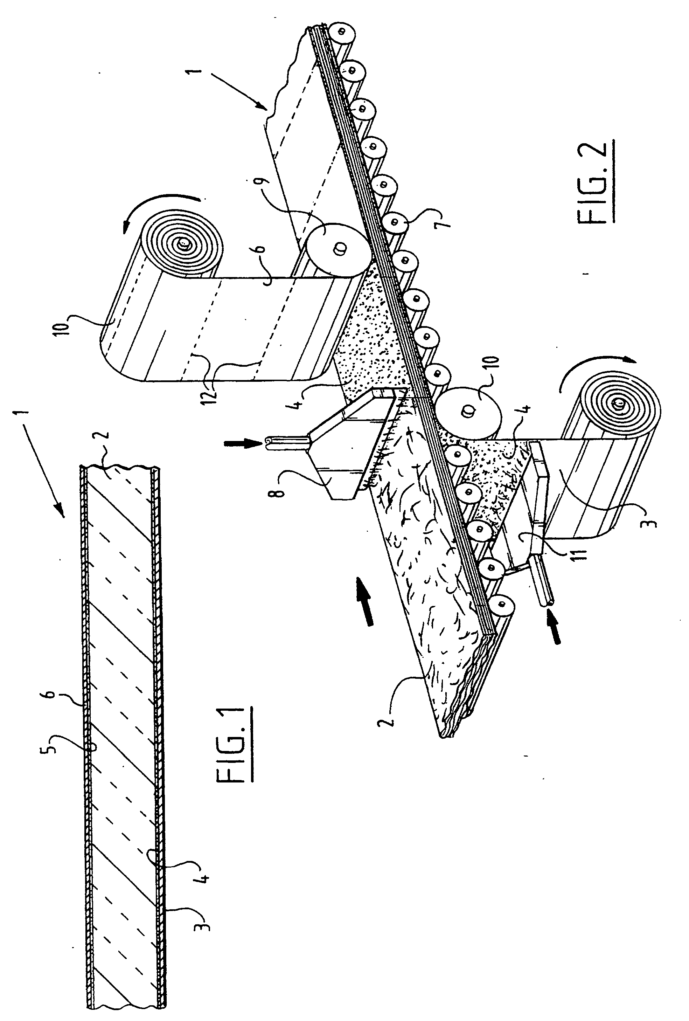

Figure 1 shows an insulation blanket 1 formed by an actual blanket 2 of mineral wool. On its underside the blanket is provided with a back sheet 3 manufactured from for instance foil or paper and serving to prevent air circulation through the blanket. The back sheet further has moisture-proof properties. The back sheet is connected by means of an adhesive layer 4 to the actual blanket 2 of mineral wool.

On its top side the blanket 2 of mineral wool is provided with a sticky adhesive layer 5. This adhesive layer is used to fix the arranged insulation blanket onto the objects for insulating. So as to facilitate storage and transport a removable cover sheet 6 provided with a layer of silicone material is arranged on adhesive layer 5. It is noted here that the adhesive layer extends only a short distance from the edge of the insulation blanket in order to facilitate detaching of the cover sheet.

Production of such an insulation blanket proceeds as follows.

Starting from a blanket of mineral wool 2 supplied via a conveyor belt formed by rollers 7, a quantity of adhesive is initially supplied by means of an atomizing device 8 provided with nozzles 11 and sprayed in the form of a hot melt. The material is supplied in heated state so that it is fluid and it is applied in such a thin quantity by spraying thereof that a cobweb-like or mesh-like structure is created. During the cooling process it herein adheres to the fibres of the blanket of mineral wool 2. This adhesion has both a chemical and mechanical character.

It is essential that the material is fluid in heated state and can adhere to the fibres but that in cooled state it has sufficient adhesive force.

A layer of cover sheet 6 in the form of silicone PE foil is subsequently arranged by means of a roller 9. As a consequence of the presence of this foil the material can easily be rolled up or stacked.

A back sheet 3 which can take the form of a layer of paper, aluminium foil, plastic or a combination thereof is further arranged on the underside by means of a heated roller 10. Here also a suitable adhesive material is used; it is however essential herein that the adhesive material, as soon as it has cooled or, if it is provided with a solvent, as soon as the solvent has evaporated, forms a good adhesion between the back sheet and the mineral wool. The adhesive is already present on the foil and it is heated on roller 10 so that the foil can be separated from the roller.

Such a blanket can be used in the ways shown in figures 3a-3d.

In order to facilitate the process of arranging such an insulation blanket, cover sheet 6 is provided with perforations 12. It is hereby possible to remove only a part-cover sheet from a piece of insulation blanket, whereafter the associated piece of insulation blanket can be arranged. The other part-cover sheets can then be successively removed and the associated parts of the insulation blanket fixedly adhered.

It is possible instead to perforate the cover sheet only after it is arranged on the insulation blanket; use will then have to be made for this purpose of for instance a laser.

It is moreover possible to separate the cover sheets by tearing; the material lends itself thereto and in order to start the tear use can be made of a weakening in the form of a small cut which can be arranged for instance by laser means. This offers the option of arranging the small cuts after placing of the cover sheet.

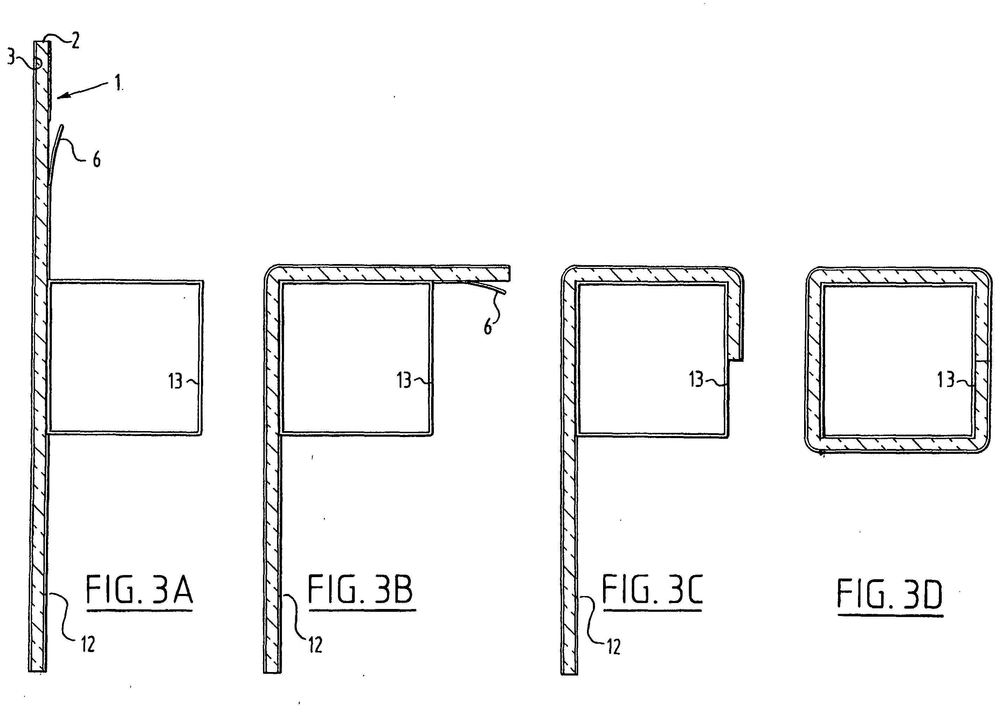

During the arrangement of such an insulation blanket, which process is shown in figure 3, a part-cover sheet enclosed between two perforations 12 is first removed in the middle. The part of the insulation blanket then left clear can be adhered to the object for insulating, in the present case an air duct with a rectangular cross-section 13. A following part-cover sheet can then be removed and the top side of air duct 13 can be provided with insulation material.

The above situation is shown in figure 3b.

The cover sheet can then be removed from the remaining part of the insulation blanket on the top side and the relevant.part of the insulation blanket can be folded and adhered to the right-hand side of the air duct.

Such a situation is shown in figure 3c.

Finally, a similar procedure can be carried out on the underside of the air duct until the air duct is covered with the insulation blanket over its whole cross-section.

Although the embodiment described here relates to a duct with a rectangular cross-section, it will be apparent that the invention can also be applied on ducts with a differently shaped, for instance round, cross-section.

The insulation blanket must of course be cut to size herein. It is assumed here that prior to arrangement the insulation blanket is cut to an overmeasure.

It will be apparent that diverse modifications can be made in said description without departing from the invention.

## Claims

1. Flexible insulation blanket (1) manufactured from mineral wool (2), which is provided on one side with an adhesive layer (5) which is at least tacky at room temperature, which extends to a predetermined depth into the insulation blanket, is anchored mechanically to the mineral wool, and of which the adhesive force is at least as great at room temperature as the cohesion of the insulation blanket, wherein:
- the adhesive is applied by spraying through an atomising device (8, 11); and
- the adhesive layer is applied to the mineral wool blanket (2) in an uncompressed state.
**CHARACTERISED IN THAT**
- the blanket is designed to be adhered to an air duct on said one side by means of said adhesive layer (5); and
- the adhesive layer extends over the insulation blanket in a mesh-like structure,

2. Insulation blanket as claimed in claim 1, further comprising an air-flow inhibiting foil (3) on a back side of the insulation blanket opposite said one side, said foil (3) being connected to said blanket by means of an additional adhesive layer (4).

3. Insulation blanket as claimed in claim 1 or 2, **characterized in that** the main direction of the fibres of the mineral wool extends transversely of the plane of the blanket.

4. Insulation blanket as claimed in claim 1, 2 or 3, **characterized in that** a protective carrier film (6)is arranged on the adhesive layer (5).

5. Insulation blanket as claimed in claim 4, **characterized in that** the carrier film (6) is divided into part-carrier films for individual removal.

6. Insulation blanket as claimed in claim 5, **characterized in that** the carrier films are separated by a weakening (12).

7. Insulation blanket as claimed in claim 5 or 6, **characterized in that** at the position of a division between part-carrier films a weakening is arranged which extends a short distance from the side edge.

8. Insulation blanket as claimed in claim 6 or 7, **characterized in that** such weakenings are arranged on either side of the blanket.

9. Insulation blanket as claimed in claim 7 or 8, **characterized in that** on at least one side of the insulation blanket the adhesive is applied up to a limited distance from the edge.

10. Insulation blanket as claimed in claim 6, 7, 8 or 9, **characterized in that** the weakening is formed by a cut.

11. Insulation blanket as claimed in claim 6, 7, 8 or 9, **characterized in that** the weakening is formed by a perforation.

12. Insulation blanket as claimed in any of the claims 6 - 11, **characterized in that** the weakening is formed by laser.

13. Insulation blanket as claimed in any of the foregoing claims, **characterized in that** the adhesive layer is formed by Jowatherm 245.00.

14. Method of manufacturing a flexible insulation blanket, comprising: manufacture of a mineral wool blanket; and providing on one side of the mineral wool blanket (2) an adhesive layer (5) which is at least tacky at room temperature, which extends to a predetermined depth into the insulation blanket, is anchored mechanically to the mineral wool, and of which the adhesive force is at least as great at room temperature as the cohesion of the insulation blanket, wherein
- the adhesive is applied by spraying through an atomising device (8, 11); and
- the adhesive layer is applied to the mineral wool blanket (2) in an uncompressed state.
**CHARACTERISED IN THAT**
- the blanket is designed to be adhered to an air duct on said one side by means of the adhesive layer (5); and
- the adhesive layer (5) extends over the insulation blanket in a mesh-like structure;

15. Method as claimed in claim 14, wherein an an air-flow inhibiting foil (3) is arranged on a back side of the mineral wool blanket opposite said one side by means, where said foil is connected to said blanket by means of an additional adhesive layer (4).
on said back side.

16. Method as claimed in claim 14, **characterized by** atomizing of the adhesive layer in a rotating pattern.

17. Method as claimed in claim 15 or 16, **characterized by** arranging a carrier film (6) on the adhesive layer (5) after the adhesive layer has been applied.

18. Method as claimed in claim 17, **characterized by** arranging weakenings in the carrier film (6) after the carrier film has been arranged on the mineral wool blanket.

19. Method of arranging an insulation blanket as claimed in any of the claims 6 - 13 on a body for insulating, **characterized by** removing a part of the carrier film (6) located between two weakening lines (12) initially and then arranging the part of the insulation blanket, which part is left clear after removal of the part of the film (6), on the body for insulating; and repeating this step until the whole blanket is arranged on the body.

## Patentansprüche

1. Aus Mineralwolle (2) hergestellter elastischer Isoliermantel (1), der auf einer Seite mit einer Klebeschicht (5) versehen ist, die bei Raumtemperatur zumindest klebend ist, sich bis auf eine vorgegebene Tiefe in den Isoliermantel hinein erstreckt, mechanisch an der Mineralwolle befestigt ist und deren Adhäsionsvermögen bei Raumtemperatur mindestens so groß ist wie die Kohäsion des Isoliermantels, wobei:
- das Klebemittel aufgetragen wird durch Aufsprühen durch eine Zerstäubervorrichtung (8, 11); und
- die Klebeschicht auf den Mineralwollmantel (2), der sich in einem nicht komprimierten Zustand befindet, aufgetragen wird,
**DADURCH GEKENNZEICHNET, DASS**
- der Mantel so konzipiert ist, dass er an der genannten einen Seite mittels der genannten Klebeschicht (5) an einen Luftkanal geklebt wird; und
- die Klebeschicht sich in einer maschenartigen Struktur über den Isoliermantel erstreckt.

2. Isoliermantel gemäß Anspruch 1, der weiter auf einer Rückseite des Isoliermantels gegenüber der genannten einen Seite eine Luftstromschutzfolie (3) umfasst, wobei die genannte Folie (3) mittels einer zusätzlichen Klebeschicht (4) mit dem genannten Mantel verbunden ist.

3. Isoliermantel gemäß Anspruch 1 oder 2, **dadurch gekennzeichnet, dass** die Hauptrichtung der Fasern der Mineralwolle quer zur Fläche des Mantels verläuft.

4. Isoliermantel gemäß Anspruch 1, 2 oder 3, **dadurch gekennzeichnet, dass** ein schützender Transportfilm (6) auf der Klebeschicht (5) angeordnet ist.

5. Isoliermantel gemäß Anspruch 4, **dadurch gekennzeichnet dass** der Transportfilm (6) für ein individuelles Entfernen in Teiltransportfilme aufgeteilt ist.

6. Isoliermantel gemäß Anspruch 5, **dadurch gekennzeichnet, dass** die Transportfilme durch eine Schwächung (12) getrennt sind.

7. Isoliermantel gemäß Anspruch 5 oder 6, **dadurch gekennzeichnet, dass** an der Position einer Teilung zwischen Teiltransportfilmen eine Schwächung angeordnet ist, die sich einen kleinen Abstand vom Seitenrand ausdehnt.

8. Isoliermantel gemäß Anspruch 6 oder 7, **dadurch gekennzeichnet, dass** solche Schwächungen auf beiden Seiten des Mantels angeordnet sind.

9. Isoliermantel gemäß Anspruch 7 oder 8, **dadurch gekennzeichnet, dass** auf mindestens einer Seite des Isoliermantels das Klebemittel aufgetragen wird bis auf einen begrenzten Abstand vom Rand.

10. Isoliermantel gemäß Anspruch 6, 7, 8 oder 9, **dadurch gekennzeichnet, dass** die Schwächung durch einen Schnitt herbeigeführt wird.

11. Isoliermantel gemäß Anspruch 6, 7, 8 oder 9, **dadurch gekennzeichnet, dass** die Schwächung durch eine Perforierung herbeigeführt wird.

12. Isoliermantel gemäß einem der Ansprüche 6 - 11, **dadurch gekennzeichnet, dass** die Schwächung durch Laser herbeigeführt wird.

13. Isoliermantel gemäß einem der vorstehenden Ansprüche, **dadurch gekennzeichnet, dass** die Klebeschicht durch Jowatherm 245.00 gebildet wird.

14. Verfahren zur Herstellung eines elastischen Isoliermantels, umfassend: Herstellung eines Mineralwollmantels; und Vorsehen auf einer Seite des Mineralwollmantels (2) einer Klebeschicht (5), die bei Raumtemperatur zumindest klebend ist, sich bis auf eine vorgegebene Tiefe in den Isoliermantel hinein erstreckt, mechanisch an der Mineralwolle befestigt ist und deren Adhäsionsvermögen bei Raumtemperatur mindestens so groß ist wie die Kohäsion des Isoliermantels, wobei:
- das Klebemittel aufgetragen wird durch Aufsprühen durch eine Zerstäubervorrichtung (8, 11); und
- die Klebeschicht auf den Mineralwollmantel (2), der sich in einem nicht komprimierten Zustand befindet, aufgetragen wird,
**DADURCH GEKENNZEICHNET, DASS**
- der Mantel konzipiert ist, dass er an der genannten einen Seite mittels der Klebeschicht (5) an einen Luftkanal geklebt wird; und
- die Klebeschicht (5) sich in einer maschenartigen Struktur über den Isoliermantel erstreckt.

15. Verfahren gemäß Anspruch 14, wobei eine Luftstromschutzfolie (3) durch Mittel auf einer Rückseite des Mineralwollmantels gegenüber der genannten einen Seite angeordnet ist, wobei die genannte Folie mit dem genannten Mantel durch eine zusätzliche Klebeschicht (4) verbunden ist.

16. Verfahren gemäß Anspruch 14, **gekennzeichnet durch** Aufstäuben der Klebeschicht in einem kreisenden Schema.

17. Verfahren gemäß Anspruch 15 oder 16, **gekennzeichnet durch** Anordnen eines Transportfilms (6) auf der Klebeschicht (5) nachdem die Klebeschicht aufgetragen wurde.

18. Verfahren gemäß Anspruch 17, **gekennzeichnet durch** Anordnung von Schwächungen in dem Transportfilm (6) nachdem der Transportfilm auf dem Mineralwollmantel angeordnet wurde.

19. Verfahren des Anordnens eines Isoliermantels gemäß einem der Ansprüche 6 - 13 auf einem zu isolierenden Körper, **gekennzeichnet durch** zunächst Entfemung eines Teiles des zwischen zwei Schwächungsstreifen (12) angeordneten Transportfilms (6) und nachfolgendem Anordnen des Teils des Isoliermantels, der nach Entfernung des Teils des Films (6) freigemacht ist, auf dem zu isolierenden Körper; und Widerholung dieses Schrittes bis der ganze Mantel auf dem Körper angeordnet ist.

## Revendications

1. Couverture isolante souple (1) fabriquée à partir de laine minérale (2), qui est pourvue sur un côté d'une couche adhésive (5) qui est au moins collante à température ambiante, qui s'étend jusqu'à une profondeur prédéterminée dans la couverture isolante, est ancrée mécaniquement à la laine minérale, et dont la force d'adhérence est au moins aussi grande à température ambiante que la cohésion de la couverture isolante, dans laquelle :
- l'adhésif est appliqué par pulvérisation à l'aide d'un dispositif d'atomisation (8, 11) ; et
- la couche adhésive est appliquée sur la couverture de laine minérale (2) dans un état non comprimé ;
**caractérisée en ce que** :
- la couverture est conçue pour adhérer à un conduit d'air sur ledit un côté au moyen de ladite couche adhésive (5) ; et
- la couche adhésive s'étend sur la couverture d'isolation dans une structure maillée.

2. Couverture isolante selon la revendication 1, comprenant en outre une feuille (3) bloquant l'écoulement d'air sur un côté arrière de la couverture isolante opposé audit un côté, ladite feuille (3) étant reliée à ladite couverture au moyen d'une couche adhésive supplémentaire (4).

3. Couverture isolante selon la revendication 1 ou 2, **caractérisée en ce que** la direction principale des fibres de la laine minérale s'étend transversalement par rapport au plan de la couverture.

4. Couverture isolante selon la revendication 1, 2 ou 3, **caractérisée en ce qu'**un film porteur de protection (6) est agencé sur la couche adhésive (5).

5. Couverture isolante selon la revendication 4, **caractérisée en ce que** le film porteur (6) est divisé en films porteurs de parties pour un retrait individuel.

6. Couverture isolante selon la revendication 5, **caractérisée en ce que** les films porteurs sont séparés par un affaiblissement (12).

7. Couverture isolante selon la revendication 5 ou 6, **caractérisée en ce qu'**au niveau de la position d'une division entre des films porteurs de parties, un affaiblissement est agencé, lequel s'étend à courte distance du bord latéral.

8. Couverture isolante selon la revendication 6 ou 7, **caractérisée en ce que** de tels affaiblissements sont agencés de chaque côté de la couverture.

9. Couverture isolante selon la revendication 7 ou 8, **caractérisée en ce que** sur au moins un côté de la couverture isolante, l'adhésif est appliqué jusqu'à une distance limitée du bord.

10. Couverture isolante selon la revendication 6, 7, 8 ou 9, **caractérisée en ce que** l'affaiblissement est formé par une découpe.

11. Couverture isolante selon la revendication 6, 7, 8 ou 9, **caractérisée en ce que** l'affaiblissement est formé par une perforation.

12. Couverture isolante selon l'une quelconque des revendications 6 à 11, **caractérisée en ce que** l'affaiblissement est formé par laser.

13. Couverture isolante selon l'une quelconque des revendications précédentes **caractérisée en ce que** la couche adhésive est formée par du Jowatherm 245,00.

14. Procédé de fabrication d'une couverture isolante souple, comprenant les étapes consistant à : fabriquer une couverture de laine minérale ; et disposer sur un côté de la couverture de laine minérale (2) une couche adhésive (5) qui est au moins collante à température ambiante, qui s'étend jusqu'à une profondeur prédéterminée dans la couverture isolante, est ancrée mécaniquement à la laine minérale, et dont la force d'adhérence est au moins aussi grande à température ambiante que la cohésion de la couverture isolante, dans laquelle :
- l'adhésif est appliqué par pulvérisation à l'aide d'un dispositif d'atomisation (8, 11) ; et
- la couche adhésive est appliquée sur la couverture de laine minérale (2) dans un état non comprimé ;
**caractérisée en ce que** :
- la couverture est conçue pour adhérer à un conduit d'air sur ledit un côté au moyen de ladite couche adhésive (5) ; et
- la couche adhésive (5) s'étend sur la couverture d'isolation dans une structure maillée.

15. Procédé selon la revendication 14, dans lequel une feuille bloquant un écoulement d'air (3) est agencée sur un côté arrière de la couverture de laine minérale opposé audit un côté au moyen, là où ladite feuille est reliée à ladite couverture, d'une couche adhésive supplémentaire (4) sur ledit côté arrière.

16. Procédé selon la revendication 14, **caractérisé en ce qu'**il comprend l'atomisation de la couche adhésive selon un modèle rotatif.

17. Procédé selon la revendication 15 ou 16, **caractérisé en ce que** l'on agence un film porteur (6) sur la couche adhésive (5) après que la couche adhésive a été appliquée.

18. Procédé selon la revendication 17, **caractérisé en ce que** l'on agence des affaiblissements dans le film porteur (6) après que le film porteur a été agencé sur la couverture de laine minérale.

19. Procédé pour agencer une couverture isolante selon l'une quelconque des revendications 6 à 13 sur un corps dans un but d'isolation, **caractérisé en ce que** l'on retire une partie du film porteur (6) située initialement entre deux lignes d'affaiblissement (12), **en ce qu'**on agence ensuite la pièce de la couverture isolante, laquelle pièce est laissée dégagée après retrait de la pièce du film (6), sur le corps dans un but d'isolation ; et **en ce qu'**on répète cette étape jusqu'à ce que toute la couverture soit agencée sur le corps.
